# EUROPÄISCHE PATENTSCHRIFT

(11) **EP 1 494 890 B1**
(45) Veröffentlichungstag und Bekanntmachung des Hinweises auf die Patenterteilung: **22.08.2007**
(21) Anmeldenummer: 02717925.8
(22) Anmeldetag: 15.04.2002
(51) Int. Cl.: B60P 3/04, B60P 1/43

(54) **VORRICHTUNG ZUR SEITLICHEN EINZÄUNUNG EINER VERLADERAMPE FÜR TIERE**
DEVICE FOR LATERALLY FENCING IN A LOADING RAMP FOR ANIMALS
DISPOSITIF POUR PALISSADER LATERALEMENT UNE RAMPE DE CHARGEMENT POUR ANIMAUX

(43) Veröffentlichungstag der Anmeldung: 12.01.2005
(73) Patentinhaber: Stiftung Forschung für das Pferd, 8057 Zürich (CH)
(72) Erfinder: VON RECHENBERG, Brigitte, CH-8903 Birmensdorf (CH); HOFMANN, Margaret, CH-1009 Pully (CH); MEYER, Marc, CH-1007 Lausanne (CH)
(74) Vertreter: Lusuardi, Werther
(86) Internationale Anmeldenummer: PCT/CH2002/000208
(87) Internationale Veröffentlichungsnummer: WO 2003/086812

(56) Entgegenhaltungen:
- DE-A- 10 006 045
- DE-A- 19 539 430
- DE-C- 10 037 186
- US-A- 2 228 946
- US-A- 3 921 585
- US-A- 4 037 564
- US-A- 4 201 157
- US-A- 4 537 151
- US-A- 4 566 404

## Beschreibung

Die Erfindung bezieht sich auf eine Vorrichtung zur seitlichen Einzäunung einer an einem Transportfahrzeug angebrachten Verladerampe, gemäss dem Oberbegriff des Patentanspruchs 1.

Ein beim Verladen von Pferden in ein Transportfahrzeug häufig auftretendes Problem liegt darin, dass die Pferde leicht in Panik geraten, wenn sie über eine Verladerampe ohne seitliche Führung in das Transportfahrzeug gehen sollen. Ferner können sich die Tiere beim Betreten der Verladerampe verletzen, wenn sie beispielsweise mit den Hufen zwischen die Verladerampe und eine seitlich an der Verladerampe aufgestellte Begrenzungswand geraten.

Aus der US 4,037,564 SCHROCK ist eine Verladerampe bekannt, welche zwei seitlich aufklappbare Begrenzungswände umfasst, wobei die Begrenzungswände mittels Haken in der nach oben aufgeklappten Position fixierbar sind.

Eine weitere Verladerampe ist aus der gattungsgemäßen US 2,228,946 CARTER bekannt, welche zusätzlich zu den seitlich aufklappbaren Begrenzungswänden verschiebbare Stangen umfasst, mittels welcher der dreieckförmige Zwischenraum zwischen den Begrenzungswänden und dem hinteren Ende des Transportfahrzeugs geschlossen wird. Der Nachteil dieser bekannten Verladerampe besteht darin, dass diese Stangen in den Begrenzungswänden integriert sind und bei der Demontage einzeln heraus geschoben und am Transportfahrzeug fixiert werden müssen.

Hier will die Erfindung Abhilfe schaffen. Der Erfindung liegt die Aufgabe zugrunde, eine Vorrichtung zur seitlichen Einzäunung einer Verladerampe zu schaffen, wodurch die Verletzungsgefahr der Tiere beim Überqueren der Verladerampe verringert wird.

Die Erfindung löst die gestellte Aufgabe mit einer Vorrichtung zur seitlichen Einzäunung einer an einem Transportfahrzeug angebrachten Verladerampe, welche die Merkmale des Anspruchs 1 aufweist.

Die erfindungsgemässe Vorrichtung umfasst zwei seitliche Begrenzungswände, welche parallel zur Längsachse einer Verladerampe an dieser anbringbar sind und je zwei untere, zur Längsachse parallele Seitenkanten aufweisen. Die Begrenzungswände sind mittels Scharnieren, weiche zu den Seitenkanten parallele Drehachsen aufweisen an der Verladerampe befestigbar, so dass die Begrenzungswände um die Drehachsen schwenkbar sind und dabei in eine zur begehbaren Fläche der Verladerampe senkrechte Position nach oben aufklappbar sind und in eine zur begehbaren Fläche parallele Position zusammenklappbar sind. Ferner umfasst die Vorrichtung Stützmittel, welche an den nach oben aufgeklappten Begrenzungswänden lösbar befestigbar sind, so dass die Begrenzungswände in der nach oben aufgeklappten Position fixierbar sind. Zudem sind Steckwände vorgesehen, welche in den zwischen den seitlichen Begrenzungswänden und dem hinteren Ende des Transportfahrzeuges verbleibenden, dreieckförmigen Zwischenraum von oben her einfügbar sind.

Die durch die Erfindung erreichten Vorteile sind im wesentlichen darin zu sehen, dass dank der erfindungsgemässen Vorrichtung:
- das Tier nicht von der Verladerampe fallen kann;
- in der nach oben geklappten Position der Begrenzungswände kein Zwischenraum zwischen den seitlichen Begrenzungswänden und der Verladerampe besteht, so dass die Tiere mit ihren Hufen nicht in einen Spalt geraten und sich verletzen können;
- die seitlichen Begrenzungswände aufklappbar mit der Verladerampe verbindbar sind, und dadurch einfach nach oben aufgeklappt oder zum Transport zusammengeklappt werden können;
- das Tier durch eine einzige Person verladen werden kann;
- die seitlichen Begrenzungswände in der nach oben geklappten Position stabilisierbar sind; und
- zwischen dem hinteren Ende des Transportfahrzeuges und den seitlichen Begrenzungswänden kein Zwischenraum verbleibt, wodurch die Verletzungsgefahr für das Tier weiter verringert werden kann.

In der bevorzugten Ausführungsform der erfindungsgemässen Vorrichtung umfassen die Stützmittel auf jeder Seitenwand des Transportfahrzeuges angeordnet je eine Halterung und eine ausziehbare Stange, wobei die Halterungen an je einer zur Längsachse der Verladerampe parallelen Seitenwand des Transportfahrzeuges befestigbar ist. Die Stangen weisen je eine Zentralachse auf und sind parallel zur Zentralachse verschiebbar in den Halterungen gelagert. Ferner sind die Stangen mittels Arretiermitteln in ihrer aus- respektive eingefahrenen Position blockierbar.

Die Vorteile dieser Ausführungsform liegen darin, dass die Vorrichtung mit einfachen Mitteln nachträglich an einem Transportfahrzeug mit Verladerampe angebracht werden kann. Die Vorrichtung ist ortsunabhängig und dem jeweiligen Terrain anpassbar.

In einer anderen Ausführungsform der erfindungsgemässen Vorrichtung sind an den hinteren Enden der Stützmittel als Haken ausgebildete Feststellmittel angeordnet. Die Haken sind in der ausgefahrenen Position der Stangen hinten um die seitlichen Begrenzungswände klemmbar. Die Vorrichtung ist durch diese Ausgestaltung der Feststellmittel einfach ausgestaltet und ohne grossen Aufwand bedienbar.

Vorzugsweise sind die Steckwände mittels Klammern an den Begrenzungswänden befestigbar. Durch diese Ausgestaltung der Steckwände ist eine einfache Ausführung der erfindungsgemässen Vorrichtung sowie eine einfache Montage und Demontage der einzelnen Teile erreichbar.

In wiederum einer weiteren Ausführungsform der erfindungsgemässen Vorrichtung umfasst diese zusätzlich eine an einem Transportfahrzeug schwenkbar befestigbare Verladerampe mit einer begehbaren Fläche. Die Verladerampe ist um eine zu ihrer Längsachse orthogonale, zweite Drehachse drehbar. Vorteilhaft ist die Möglichkeit, die teilweise vormontierte Vorrichtung nachträglich an einem Transportfahrzeug anzubringen.

In einer anderen Ausführungsform umfasst die erfindungsgemässe Vorrichtung zusätzlich transportierbare Zäune, welche aus mehreren, schwenkbar miteinander verbundenen Zaunelementen zusammenstellbar sind. Hierdurch ist der Vorteil erreichbar, dass durch die Zäune die seitliche Begrenzung des Verladepfades verlängert und zudem durch ein oder mehrere weitere Zaunelement gegen hinten verschliessbar ist, so dass beispielsweise einem zu verladenden Pferd die Möglichkeit seitlich oder nach hinten ausbrechen zu können genommen wird.

In wiederum einer weiteren Ausführungsform der erfindungsgemässen Vorrichtung umfasst diese zusätzlich am Transportfahrzeug befestigbare Aufbewahrungsmittel für die Zäune, wobei ein Zaun in seinem zusammengeklappten Zustand in den Aufbewahrungsmitteln lösbar befestigbar ist. Vorzugsweise ist je eines dieser Aufbewahrungsmittel an einer der Seitenwände des Transportfahrzeuges angeordnet und umfasst je eine zweite Halterung und Spannriemen. Vorteilhaft an dieser Ausführungsform ist, dass die Vorrichtung einfache Mittel umfasst, welche nachträglich sehr einfach am Transportfahrzeug angebracht werden können. Ferner sind dadurch zwei Zäume mit dem Transportfahrzeug mitführbar.

Die Erfindung und Weiterbildungen der Erfindung werden im folgenden anhand der teilweise schematischen Darstellungen mehrerer Ausführungsbeispiele noch näher erläutert.

Es zeigen:
Fig. 1 die bevorzugte Ausführungsform der erfindungsgemässen Vorrichtung montiert an einem Pferdetransportanhänger und mit nach oben aufgeklappten Begrenzungswänden;
Fig. 2 die in Fig. 1 dargestellte Ausführungsform der erfindungsgemässen Vorrichtung mit parallel zur begehbaren Fläche der Verladerampe zusammengeklappten Begrenzungswänden;
Fig. 3 eine weitere Ausführungsform der erfindungsgemässen Vorrichtung mit seitlichen Zäunen; und
Fig. 4 die in Fig. 3 dargestellte Ausführungsform der erfindungsgemässen Vorrichtung in transportbereitem Zustand.

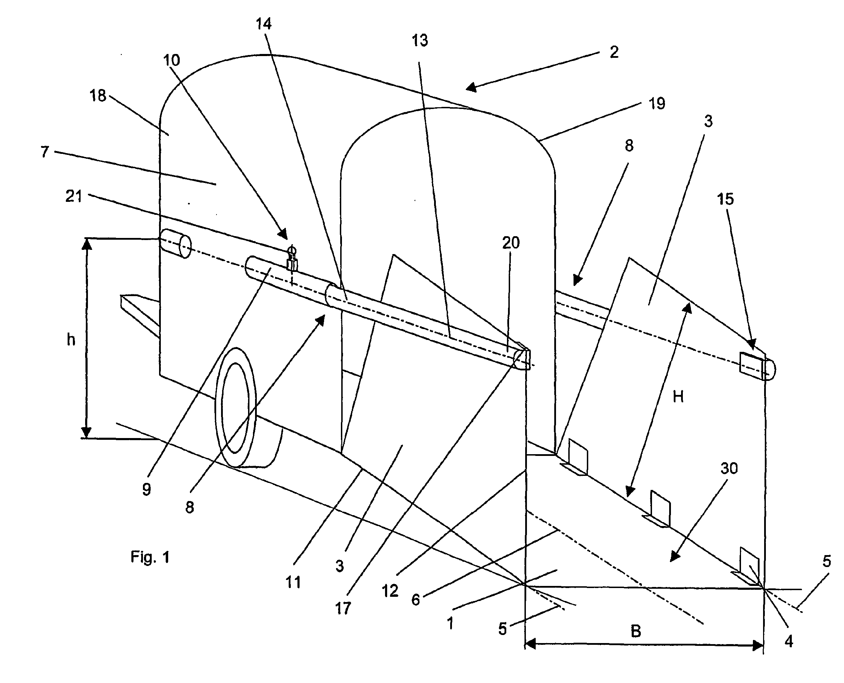

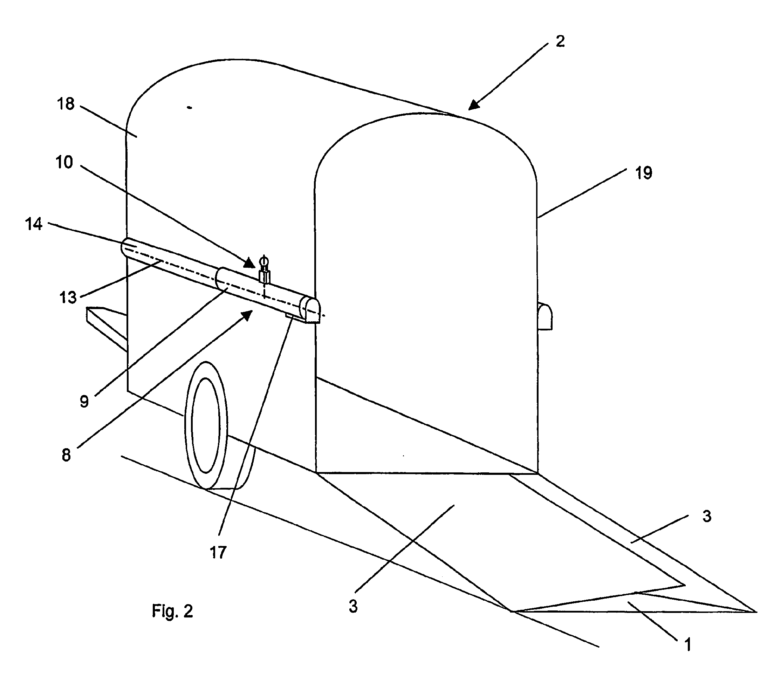

In Fig. 1 ist als Transportfahrzeug 2 ein Pferdetransportanhänger dargestellt, welcher an seiner Hinterseite eine ausklappbare Verladerampe 1 mit einer Längsachse 6 aufweist. Parallel zur Längsachse 6 und an den seitlichen Begrenzungen der nach unten geklappten Verladerampe 1 sind die zwei Begrenzungswände 3 angeordnet. Die Begrenzungswände 3 sind hier nach oben und senkrecht zur begehbaren Fläche 30 der Verladerampe 1 aufgeklappt und mittels der Stützmittel 8 in dieser Position fixiert. Ferner sind die Begrenzungswände 3 mittels Scharnieren 4 um Drehachsen 5 schwenkbar mit der Verladerampe 1 verbunden, wobei die Drehachsen 5 parallel zur Längsachse 6 und ebenfalls parallel zu den unteren Seitenkanten 11 der Begrenzungswände 3 angeordnet sind. Die senkrecht zur Fläche 30 gemessene Höhe H der Begrenzungswände 3 ist kleiner oder maximal gleich wie die Breite B der Verladerampe 1. Die Begrenzungswände 3 sind somit aus der nach oben geklappten Position in zur Fläche 30 der Verladerampe 1 parallele Ebenen klappbar, so dass die Begrenzungswände 3 während der Fahrt nicht vom Transportfahrzeug 2 demontiert werden müssen. Die Stützmittel 8 umfassen für jede Begrenzungswand 3 eine Stange 14 mit einer im wesentlichen horizontal verlaufenden Zentralachse 13 sowie an den Seitenwänden 7 des Transportfahrzeuges 2 angebrachte, hülsenförmige Halterungen 9. Die Stangen 14 sind in den Halterungen 9 parallel zu den Zentralachsen 13 verschiebbar gelagert. In der eingefahrenen Position (Fig. 2) der Stützmittel 8 sind die Stangen 14 in den Halterungen 9 soweit gegen das vordere Ende 18 des Transportfahrzeuges 2 verschoben, dass sie nicht über das hintere Ende 19 des Transportfahrzeuges 2 hinausragen. In der ausgefahrenen Position der Stützmittel 8 sind die Stangen 14 soweit aus den Halterungen 9 herausgezogen, dass die hinteren Enden 20 der Stangen 14 so weit über die hinteren, quer zur Längsachse 6 stehenden Seitenkanten 12 der Begrenzungswände 3 hinausreichen, dass die als Haken 17 ausgebildeten Feststellmittel 15 die Begrenzungswände 3 bei den hinteren Seitenkanten 12 umklammern und damit die Begrenzungswände 3 in ihrer nach oben geklappten Position fixiert werden können. Ferner sind an den Halterungen 9 Arretiermittel 10 angeordnet, womit die Stangen 14 in ihrer jeweiligen Position fixierbar sind. Die Arretiermittel 10 sind in der hier dargestellten Ausführungsform der erfindungsgemässen Vorrichtung als Schrauben 21 ausgeführt, welche quer zu den Zentralachsen 13 der Stangen 14 in die Halterungen 9 schraubbar sind. Zur Fixierung der Stangen 14 werden die Schrauben 21 soweit in die Halterungen 9 eingeschraubt, bis die Schraubenspitzen auf die Oberfläche der Stangen 14 drücken. Die vom Boden gemessene Höhe h der Zentralachsen 13 der Stangen 14 ist kleiner wie die Höhe H der Begrenzungswände 3, so dass die Feststellmittel 15 an den Begrenzungswänden 3 fixierbar sind.

In Fig. 2 sind die seitlichen Begrenzungswände 3 in der zusammengeklappten Position dargestellt. Beide Begrenzungswände 3 liegen dann in zur begehbaren Fläche 30 (Fig. 1) der Verladerampe 1 parallelen Ebenen und überragen die Verladerampe 1 seitlich, sowie vorne und hinten nicht. Ferner sind die Stützmittel 8 ebenfalls in ihrer eingefahrenen Position dargestellt. Dazu werden die Stangen 14 parallel zu ihren Zentralachsen 13 in den Halterungen 9 verschoben bis die Stangen 14 das Transportfahrzeug 2 weder an seinem vorderen Ende 18 noch an seinem hinteren Ende 19 über das zulässige Mass überragen. Die Stangen 14 sind um ihre Zentralachse 13 gedreht, so dass die Haken 17 gegen unten gekippt sind. Durch die Arretiermittel 10 werden die Stangen 14 auch in ihrer eingefahrenen Position gegen Verschiebung oder Rotation fixiert.

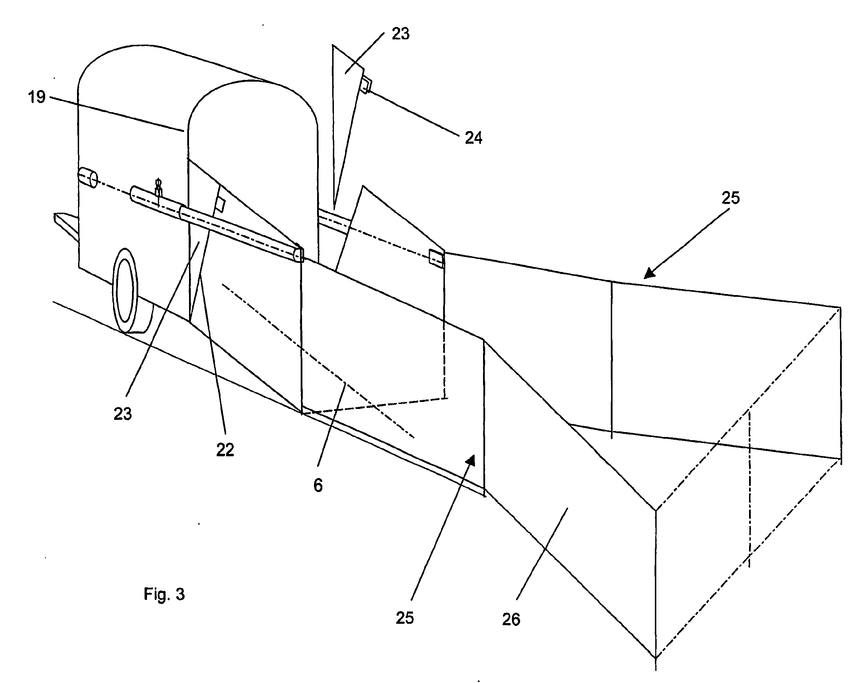

Die in Fig. 3 dargestellte Ausführungsform der erfindungsgemässen Vorrichtung unterscheidet sich von der in den Fig. 1 und 2 dargestellten Ausführungsform nur darin, dass die Vorrichtung zusätzlich zwei Steckwände 23 und zwei Zäune 25 umfasst. Die Verladerampe 1 schliesst gegenüber der Horizontalen einen Winkel ein. Ebenfalls verlaufen die vorderen, quer zur Längsachse 6 gerichteten Seitenkanten 22 der Begrenzungswände 3 in der nach oben aufgeklappten Position der Begrenzungswände 3 gegenüber dem hinteren Ende 19 des Transportfahrzeuges 2 nicht parallel, so dass zwischen den vorderen Seitenkanten 22 und dem hinteren Ende 19 ein dreieckförmiger Zwischenraum gebildet wird. Zum Verschliessen dieses Zwischenraumes werden zwischen den Begrenzungswänden 3 und dem hinteren Ende 19 des Transportfahrzeuges 2 dreieckförmige Steckwände 23 eingesetzt werden. Die Steckwände 23 lassen sich nach dem Aufklappen der seitlichen Begrenzungswände 3 in ihre nach oben aufgeklappte Position von oben her in den Zwischenraum einschieben. Befestigt werden die Steckwände 23 mittels Klammern 24 an den Begrenzungswänden 3. Die beiden Zäune 25 werden ebenfalls zur seitlichen Begrenzung des Verladepfades aufgestellt. Jeder Zaun 25 ist aus mehreren, schwenkbar miteinander verbundenen Zaunelementen 26 zusammengesetzt. Durch die schwenkbare Verbindung der Zaunelemente 26 ist erreichbar, dass jeder Zaun 25 zusammenklappbar ist und somit ebenfalls mit dem Transportfahrzeug 2 mittransportiert werden kann. Zudem kann die durch die Zäune 25 und die seitlichen Begrenzungswände 3 gebildete seitliche Begrenzung des Verladepfades auch durch ein oder mehrere weitere Zaunelemente 2 gegen hinten geschlossen werden, so dass einem zu verladenden Pferd die Möglichkeit seitlich oder nach hinten ausbrechen zu können genommen wird.

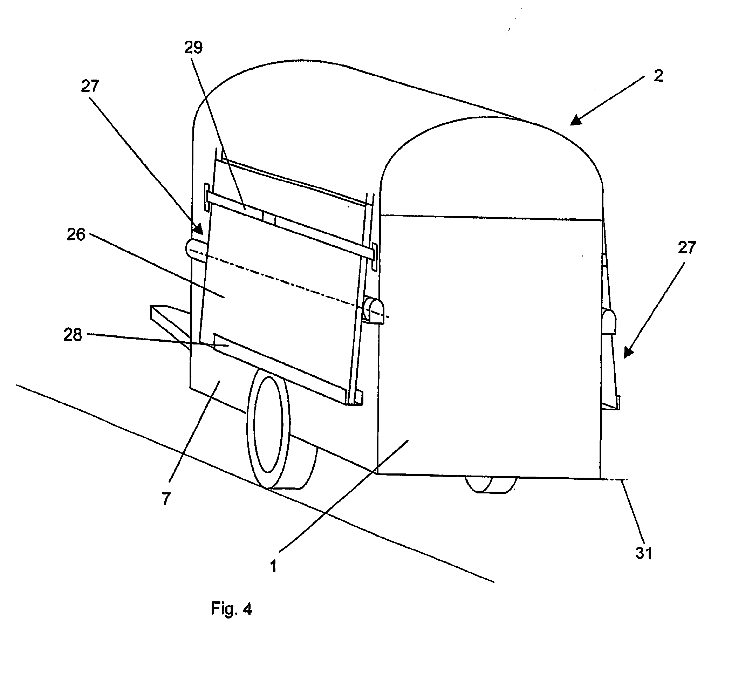

In Fig. 4 dargestellt ist das Transportfahrzeug 2 mit geschlossener, nach oben aufgeklappter Verladerampe 1 und transportfähig an den Seitenwänden 7 montierten Zaunelementen 26. Die Zaunelemente 26 sind dazu in den Aufbewahrungsmitteln 27 befestigt. Die Aufbewahrungsmittel 27 umfassen einmal je eine zweite Halterung 28, welche als U-förmige Schiene ausgestaltet ist, und Spannriemen 29, welche an den Seitenwänden 7 des Transportfahrzeuges 2 befestigbar sind und mittels welcher die mit ihren oberen Seiten in die U-förmigen Schienen gestellten Zaunelemente 26 lösbar am Transportfahrzeug 2 befestigbar sind.

## Patentansprüche

1. Vorrichtung zur seitlichen Einzäunung einer an einem Transportfahrzeug (2) angebrachten, eine begehbare Fläche (30) mit einer Längsachse (6) aufweisenden Verladerampe (1) für Tiere, umfassend
A) zwei seitliche Begrenzungswände (3), welche parallel zur Längsachse (6) an einer Verladerampe (1) anbringbar sind und je zwei untere, zur Längsachse (6) parallele Seitenkanten (11) aufweisen, wobei
B) die Vorrichtung Scharniere (4) mit zu den Seitenkanten (11) parallelen Drehachsen (5) umfasst, wobei je mindestens ein Scharnier (4) zwischen einer Begrenzungswand (3) und der Verladerampe (1) anbringbar ist, so dass die Begrenzungswände (3) um die Drehachsen (5) schwenkbar sind, in eine zur Fläche (30) senkrechte Position nach oben aufklappbar sind und in eine zur Fläche (30) parallele Position zusammenklappbar sind; und
C) die Vorrichtung Stützmittel (8) umfasst, welche an den nach oben aufgeklappten Begrenzungswänden (3) lösbar befestigbar sind, wodurch die Begrenzungswände (3) in der nach oben aufgeklappten Position fixierbar sind,
**dadurch gekennzeichnet, dass**
D) die Vorrichtung Steckwände (23) umfasst und dass die Begrenzungswände (3) vordere, quer zur Längsachse (6) verlaufende Seitenkanten (22) aufweisen, wobei die Steckwände (23) zwischen den Begrenzungswänden (3) und dem hinteren Ende (19) eines Transportfahrzeugs (2) einfügbar sind.

2. Vorrichtung nach Anspruch 1, **dadurch gekennzeichnet, dass** die Stützmittel (8) Stangen (14) und Halterungen (9) mit Arretiermitteln (10) umfassen, wobei
D) je eine Halterung (9) an einer zur Längsachse (6) der Verladerampe (1) parallelen Seitenwand (7) eines Transportfahrzeuges (2) befestigbar ist;
E) die Stangen (14) je eine Zentralachse (13) aufweisen und parallel zur Zentralachse (13) verschiebbar in den Halterungen (9) aufnehmbar sind; und
F) die Stangen (14) mittels der Arretiermittel (10) in ihrer aus- respektive eingefahrenen Position blockierbar sind.

3. Vorrichtung nach Anspruch 1 oder 2, **dadurch gekennzeichnet, dass** die Stützmittel (8) Feststellmittel (15) umfassen, welche an den Begrenzungswänden (3) lösbar befestigbar sind.

4. Vorrichtung nach Anspruch 3, **dadurch gekennzeichnet, dass** die Begrenzungswände (3) hintere, quer zur Längsachse (6) verlaufende Seitenkanten (12) aufweisen und dass die Feststellmittel (15) an den Stangen (14) befestigbare Haken (17) umfassen, welche in der ausgefahrenen Position der Stangen (14) die Begrenzungswände (3) um die hinteren Seitenkanten (12) umklammern.

5. Vorrichtung nach einem der Ansprüche 1 bis 4, **dadurch gekennzeichnet, dass** die Steckwände (23) mittels Klammern (24) an den Begrenzungswänden (3) befestigbar sind.

6. Vorrichtung nach einem der Ansprüche 1 bis 5, **dadurch gekennzeichnet, dass** sie zusätzlich eine an einem Transportfahrzeug (2) schwenkbar befestigbare Verladerampe (1) mit einer begehbaren Fläche (30) und einer Längsachse (6) umfasst, wobei die Verladerampe (1) um eine zur Längsachse (6) orthogonale, zweite Drehachse (31) drehbar ist.

7. Vorrichtung nach einem der Ansprüche 1 bis 6, **dadurch gekennzeichnet, dass** sie zusätzlich transportierbare Zäune (25) umfasst, welche aus mehreren, schwenkbar miteinander verbundenen Zaunelementen (26) zusammenstellbar sind.

8. Vorrichtung nach Anspruch 7, **dadurch gekennzeichnet, dass** sie zusätzlich an einem Transportfahrzeug (2) befestigbare Aufbewahrungsmittel (27) für die Zäune (25) umfasst, wobei mindestens ein Zaun (25) in seinem zusammengeklappten Zustand in den Aufbewahrungsmitteln (27) lösbar befestigbar ist.

9. Vorrichtung nach Anspruch 8, **dadurch gekennzeichnet, dass** die Aufbewahrungsmittel (27) an der Seitenwand (7) eines Transportfahrzeuges (2) befestigbare zweite Halterungen (28) und Spannriemen (29) umfassen.

## Claims

1. Device for laterally fencing in a loading ramp (1) for animals, mounted on a transport vehicle (2) and fitted with a walkable surface (30) with a longitudinal axis (6), comprising
A) two side boundary walls (3) applicable to a loading ramp (1) parallel to the longitudinal axis (6) and fitted with two lower side edges (11) parallel to the longitudinal axis (6), where
B) the device includes hinges (4) with pivots (5) parallel to the side edges (11), where at least one hinge (4) can be mounted between a boundary wall (3) and the loading ramp (1), so that the boundary walls (3) can be swiveled around the pivots (5), flipped upward to a position vertical to the surface (30) and folded up to a position parallel to the surface (30); and
C) the device includes supports (8) that can be detachably fastened to the flipped-up boundary walls (3), so as to make it possible to lock the boundary walls (3) in a flipped-up position,
**characterized by** the fact that
D) the device includes plug-in walls (23) and the boundary walls (3) have side edges (22) extending across the longitudinal axis (6), where the plug-in walls (23) can be inserted between the boundary walls (3) and the rear end (19) of a transport vehicle (2).

2. Device according to claim 1, **characterized by** the fact that the supports (8) comprise rods (14) and holders (9) with locking means (10), where
D) one each of the holders (9) can be fastened to one each of the side walls (7) parallel to the longitudinal axis (6) of the loading ramp (1) of a transport vehicle (2);
E) each of the rods (14) has a central axis (13) and can be received in the holders (9) in a slidable manner parallel to the central axis; and
F) the rods (14) can be locked, by using the locking means (10) in their respectively extended or retracted position.

3. Device according to claim 1 or 2, **characterized by** the fact that the supports (8) include stops (15) that can be detachably fastened to the boundary walls (3).

4. Device according to claim 3, **characterized by** the fact that the boundary walls (3) have trailing side edges (12) extending across the longitudinal axis (6) and the stops (15) include hooks (17) attachable to the rods (14) which clasp, in an extended position of the rods (14), the boundary walls (3) around the trailing side edges (12).

5. Device according to one of the claims from 1 to 4, **characterized by** the fact that the plug-in walls (23) can be fastened to the boundary walls (3) by clamps (24).

6. Device according to one of the claims from 1 to 5, **characterized by** the fact that it further includes a loading ramp (1) attachable to a transport vehicle (2) in a pivoting manner and fitted with a walkable surface (30) and a longitudinal axis (6), where the loading ramp (1) can be turned around a second pivot (31) orthogonal to the longitudinal axis (6).

7. Device according to one of the claims from 1 to 6, **characterized by** the fact that it further includes transportable fences (25) capable of being assembled from multiple fencing elements connected to each other in a revolving manner.

8. Device according to claim 7, **characterized by** the fact that it further includes storing means (27) for the fences (25) attachable to a transport vehicle, where at least one fence (25) can, in a folded-up condition, be detachably fastened in the storing means (27).

9. Device according to claim 8, **characterized by** the fact that the storing means (27) include second holders (28) and tightening belts (29) capable of being fastened to the side wall (7) of a transport vehicle (2).

## Revendications

1. Dispositif destiné à clôturer latéralement une rampe (1) de chargement d'animaux qui est montée sur un véhicule de transport (2) et qui présente une surface accessible (30) ayant un axe longitudinal (6), ledit dispositif comportant
A) deux parois de limitation latérales (3) qui peuvent être montées sur une rampe (1) de chargement parallèlement à l'axe longitudinal (6) et qui comportent chacune deux bords latéraux inférieurs (11) parallèles à l'axe longitudinal (6),
B) le dispositif comportant des charnières (4) dont les axes de rotation (5) sont parallèles aux bords latéraux (11), au moins une charnière (4) pouvant être montée entre deux parois de limitation (3) et la rampe de chargement (1) de sorte que les parois de limitation (3) peuvent pivoter autour des axes de rotation (5), peuvent être dépliées vers le haut pour venir dans une position perpendiculaire à la surface (30) et peuvent être repliées pour venir dans une position parallèle à la surface (30) ; et
C) le dispositif comportant des moyens de support (8) qui peuvent être fixés de façon amovible aux parois de limitation (3) dépliées vers le haut de sorte que les parois de limitation (3) peut être fixées dans la position dépliée vers le haut,
**caractérisé en ce que**
D) le dispositif comporte des parois enfichables (23) et **en ce que** les parois de limitation (3) comportent des bords latéraux avant (22) s'étendant transversalement à l'axe longitudinal (6), les parois enfichables (23) pouvant être insérées entre les parois de limitation (3) et l'extrémité arrière (19) d'un véhicule de transport (2).

2. Dispositif selon la revendication 1, **caractérisé en ce que** les moyens de support (8) comportent des barres (14) et des supports (9) dotés de moyens de blocage (10),
D) un support (9) pouvant être fixé à une paroi latérale (7), parallèle à l'axe longitudinal (6) de la rampe de chargement (1), d'un véhicule de transport (2) ;
E) les barres (14) comportant chacune un axe central (13) et pouvant être reçues dans les supports (9) de manière à pouvoir coulisser parallèlement à l'axe central (13) ; et
F) les barres (14) pouvant être bloquées à l'aide des moyens de blocage (10) dans leur position déployée respectivement escamotée.

3. Dispositif selon la revendication 1 ou 2, **caractérisé en ce que** les moyens de support (8) comportent des moyens de réglage fixes (15) qui peuvent être fixés de façon amovible aux parois de limitation (3).

4. Dispositif selon la revendication 3, **caractérisé en ce que** les parois de limitation (3) comportent des bords latéraux arrières (12) s'étendant transversalement à l'axe longitudinal (6) et **en ce que** les moyens de réglage fixes (15) comportent des crochets (17) qui peuvent être fixés aux barres (14) et qui serrent les parois de limitation (3) autour des bords latéraux arrières (12) lorsque les barres (14) sont dans la position déployée.

5. Dispositif selon l'une des revendications 1 à 4, **caractérisé en ce que** les parois enfichables (23) peuvent être fixées aux parois de limitation (3) au moyen de brides de fixation (24).

6. Dispositif selon l'une des revendications 1 à 5, **caractérisé en ce qu'**il comporte en plus une rampe de chargement (1) qui peut être fixée à un véhicule de transport (2) de façon à pouvoir pivoter et qui possède une surface accessible (30) et un axe longitudinal (6), la rampe de chargement (1) pouvant tourner autour d'un deuxième axe de rotation (31) orthogonal à l'axe longitudinal (6).

7. Dispositif selon l'une des revendications 1 à 6, **caractérisé en ce qu'**il comporte en plus des clôtures transportables (25) qui peuvent être composés de plusieurs éléments pivotants (26) reliés entre eux.

8. Dispositif selon la revendication 7, **caractérisé en ce qu'**il comporte en plus des moyens (27) de stockage de clôtures (25) qui peuvent être fixés au véhicule de transport (2), au moins une clôture (25) pouvant être fixée de façon amovible dans les moyens de stockage (27) lorsqu'elle est repliée.

9. Dispositif selon la revendication 8, **caractérisé en ce que** les moyens de stockage (27) comportent des courroies de serrage (29) et des deuxièmes supports (28) qui peuvent être fixés à la paroi latérale (7) d'un véhicule de transport (2).
